# EUROPÄISCHE PATENTANMELDUNG

(11) **EP 2 775 591 A1**
(43) Veröffentlichungstag der Anmeldung: **10.09.2014**
(21) Anmeldenummer: 13158213.2
(22) Anmeldetag: 07.03.2013
(51) Int. Cl.: H02K 1/24

(54) **Läufer einer rotatorischen dynamoelektrischen Reluktanzmaschine und dynamoelektrische Reluktanzmaschine**

(71) Anmelder: Siemens Aktiengesellschaft, 80333 München (DE)
(72) Erfinder: Vollmer, Rolf, 36129 Gersfeld (DE)

(57) **Zusammenfassung**

Die Erfindung betrifft Läufer (1) einer rotatorischen dynamoelektrischen Reluktanzmaschine, mit einer Rotationsrichtung (R) um eine Rotationsachse (A), wobei der Läufer (1) in Rotationsrichtung (R) betrachtet Bereiche unterschiedlicher magnetischer Widerstände aufweist, wobei Bereiche (3) mit Material von einer guten magnetischen Leitfähigkeit (µᵣ > 50) Pole mit der Polzahl 2p des Läufers ausbilden, wobei diese Bereiche von amagnetischem Stoff (µᵣ < 5) umgeben sind, wobei sich die Polteilung in Rotationsrichtung (R) betrachtet von der Mitte eines amagnetischen Bereichs (2) zur Mitte des nächsten amagnetischen Bereichs (2) erstreckt.

## Beschreibung

Läufer von rotatorischen dynamoelektrischen Reluktanzmaschinen weisen ausgeprägte Pole auf. Diese Pole werden dadurch geschaffen, dass unterschiedliche Induktivitäten in der Längs- und Querachse des Läufers konstruktiv gestaltet werden. Dabei werden die Oberflächen des Läufers beispielsweise mit gezahnten Strukturen versehen oder es werden Flusssperren in der q-Achse vorzugsweise in die Bleche des Läufers eingestanzt.

Ein derartiger Aufbau ist der US 4 795,936 zu entnehmen, dabei wird durch Aussparungen die Querreaktanz des Läufers verändert. Die Mitte der d-Achse ist damit im weichmagnetischen Material und steht als Flusspfad zur Verfügung.

Dieser Aufbau erzeugt unterschiedliche magnetische Widerstände in den d- und q-Achsen, somit werden dort ausgeprägte Pole gebildet. Die Induktivität in der d-Achse ist größer als die Induktivität in der q-Achse. Damit sind auch die magnetischen Widerstände unterschiedlich ausgeführt. Diese Differenz ist aber maßgeblich für die Drehmomentausbeute der Reluktanzmaschine

Diese bekannten Reluktanzmotoren sind vergleichsweise aufwändig herzustellen und in ihrer Drehmomentenausbeute begrenzt.

Ausgehend davon liegt der Erfindung die Aufgabe zugrunde einen Läufer einer rotatorischen dynamoelektrischen Reluktanzmaschine zu schaffen, der eine vergleichsweise höhere Drehmomentenausbeute einer rotatorischen dynamoelektrischen Reluktanzmaschine ermöglicht. Dabei soll der Herstellungsaufwand eines derartigen Läufers vergleichsweise gering sein. Die Lösung der gestellten Aufgabe gelingt durch einen Läufer einer rotatorischen dynamoelektrischen Reluktanzmaschine, mit einer Rotationsrichtung um eine Rotationsachse, wobei der Läufer in Rotationsrichtung betrachtet Bereiche unterschiedlicher magnetischer Widerstände aufweist, wobei Bereiche mit Material von einer guten magnetischen Leitfähigkeit (µᵣ > 50) Pole mit der Polzahl 2p des Läufers ausbilden, wobei diese Bereiche von amagnetischem Stoff (µᵣ < 5) umgeben sind, wobei sich die Polteilung in Rotationsrichtung betrachtet von der Mitte eines amagnetischen Bereichs zur Mitte des nächsten amagnetischen Bereichs erstreckt.

Die Lösung der gestellten Aufgabe gelingt auch durch eine rotatorische dynamoelektrische Reluktanzmaschine mit einem Läufer mit einer Rotationsrichtung um eine Rotationsachse, wobei der Läufer in Rotationsrichtung betrachtet Bereiche unterschiedlicher magnetischer Widerstände aufweist, wobei Bereiche mit Material von einer guten magnetischen Leitfähigkeit (µᵣ > 50) Pole mit der Polzahl 2p des Läufers ausbilden, wobei diese Bereiche von amagnetischem Stoff (µᵣ < 5) umgeben sind, wobei sich die Polteilung in Rotationsrichtung betrachtet von der Mitte eines amagnetischen Bereichs zur Mitte des nächsten amagnetischen Bereichs erstreckt wobei ein Ständer und Läufer der Reluktanzmaschine die gleiche Polzahl 2p aufweisen.

Durch den erfindungsgemäßen Läufer wird ein deutlich größerer Unterschied der Induktivitäten in den d- und q-Achsen des Läufers geschaffen. Der erfindungsgemäße Aufbau weist nunmehr jeweils einen amagnetischen Bereich um die Mitten der d-Achsen auf. Der Aufbau weist außerdem jeweils einen magnetischen Bereich um die Mitten der q-Achsen auf.

Vorteilhafterweise ist dabei die Welle amagnetisch ausgeführt. Die jeweiligen weichmagnetischen Pole des Läufers sind nunmehr im Querschnitt betrachtet von amagnetischem Material umgeben. Ein Pol ist somit von amagnetischen Bereichen der Pollücken, dem des zwischen dem Läufer und einem Stator einer rotatorischen dynamoelektrischen Reluktanzmaschine befindlichen Luftspalt, als auch von der amagnetischen Welle umgeben. Im Läufer sind diese amagnetischen Bereiche beispielsweise mit Luft, Aluminium und/oder amagnetischem Stahl gefüllt.

Unter amagnetisch werden dabei Stoffe und Materialien verstanden, die eine Permeabilitätszahl µᵣ < 5 aufweisen.

Unter guter magnetischer Leitfähigkeit werden dabei Stoffe und Materialien verstanden mit einer Permeabilitätszahl von µᵣ > 50.

Die Permeabilitätszahl µᵣ ist das Verhältnis von magnetischer Leitfähigkeit µ zur magnetischen Feldkonstanten µ₀.

Erfindungsgemäß sind die magnetischen Widerstände der oben genannten Anordnung so ausgeführt, dass sich ein maximales Drehmoment des Reluktanzmotors einstellt. Das Drehmoment hängt dabei unter anderem von der Differenz des magnetischen Widerstandes in der d- und q-Achse ab. Durch den erfindungsgemäßen Aufbau des Läufers stellt sich nun eine größtmögliche Differenz dieser magnetischen Widerstände in q- und d-Richtung ein.

Je nach Ausführung des Läufers (zwei-, vier- oder mehrpolig), ist die Welle dahingehend zu gestalten, dass die d-Achsen durch die Welle verlaufen und somit die Welle amagnetisch ausgeführt ist. Insbesondere bei einer zweipoligen Ausführung weist der amagnetische Bereich eine Breite vom Durchmesser der Welle auf. Dies vereinfacht den Aufbau.

Die einzelnen Pole des Läufers sind einstückig oder sind in Richtung der Rotationsachse des Läufers betrachtet geschichtet aufgebaut.

Die amagnetischen Bereiche sind mit den magnetischen Bereichen mittels Stoffschluss verbunden. Dabei sind diese Bereiche durch Klebeverbindungen oder metallischen Stoffschluss wie Schweißen oder Löten miteinander verbunden.

Des Weiteren kann nunmehr in einfacher Art und Weise dem Läufer ein geometrisch runder Umfang gegeben werden. Das hat zur Folge, dass zwar der Umfang des Läufers geometrisch rund ausgeführt ist, aber dennoch magnetisch unrund wirkt. Dieser gleichmäßige Luftspalt zwischen Ständer und Läufer führt zu reduzierter Luftreibung und erhöht somit die Effizienz der Reluktanzmaschine.

Die Erfindung sowie weitere vorteilhafte Ausgestaltungen der Erfindung sind den prinzipiell dargestellten Ausführungsbeispielen zu entnehmen; darin zeigen:
- FIG 1: einen zweipoligen Läufer,
- FIG 2: einen vierpoligen Läufer,
- FIG 3: eine Möglichkeit zur Gestaltung eines vierpoligen Läufers,
- FIG 4: vierpolige Reluktanzmaschine,
- FIG 5: einen zweipoligen Läufer mit Flussverlauf
- FIG 6: einen vierpoligen Läufer mit Flussverlauf
- FIG 7: vierpolige Reluktanzmaschine mit optimierten Abschnitten.

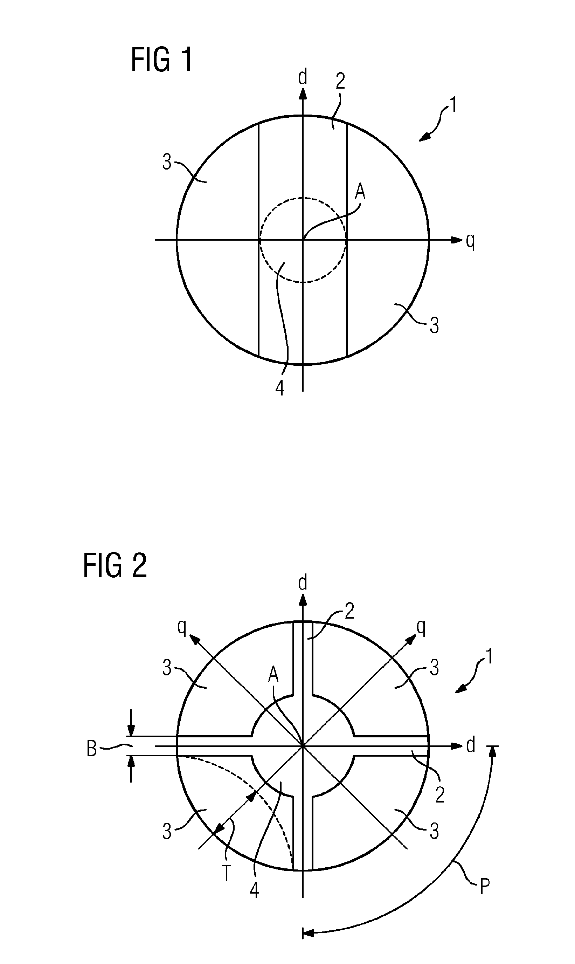

FIG 1 zeigt einen Läufer 1, der zweipolig ausgeführt ist, dabei steht eine d- und eine q-Achse senkrecht zueinander. Die Mitte der d-Achse verläuft im amagnetischen Bereich 2, der die Welle 4 beinhaltet, die ebenfalls amagnetisch ausgeführt ist. Die runde Form des Läufers 1 schließen zwei magnetische Segmente 3 ab, die zusammengesetzt mit dem amagnetischen Bereich 2 den Läufer 1 bilden. Der Läufer 1 wechselwirkt nun elektromagnetisch mit einem nicht näher dargestellten Stator und dessen bestromten Wicklungssystem. Damit stellt sich ein Drehmoment einer nicht näher dargestellten rotatorischen dynamoelektrischen Reluktanzmaschine ein.

Unter Amagnetismus wird dabei im Allgemeinen ein Stoff verstanden, der sich durch magnetische Felder nicht oder nur äußerst gering beeinflussen lässt und im Zusammenhang mit den erfinderischen Ausgestaltungen des Läufers ein µᵣ < 5 aufweist.

Unter magnetischen Stoffen werden in diesem Zusammenhang weichmagnetische Materialien verstanden. Dabei handelt es sich um ferromagnetische Materialien wie Metalle auf der Basis der ferromagnetischen Metalle wie Eisen, Cobalt und Nickel oder keramische Werkstoffe vor allem Ferrite auf der Basis von Metalloxiden, wie Mangan-Zink und Nickel-Zink.

Unter einer guten magnetischen Leitfähigkeit werden dabei Stoffe verstanden mit µᵣ > 50.

Die magnetischen Bereiche 3 werden- unabhängig von der Polzahl 2p des Läufers 1 - am amagnetischen Bereich 2 entweder durch eine in Umfangsrichtung nicht näher dargestellte Bandage und/oder aber durch dementsprechend mechanische Verbindungselemente an den Stirnseiten des Läufers 1 zusammen gehalten. Diese mechanischen Mittel können dabei massive Endscheiben bzw. Endkappen und/oder einzelne an den Stirnseiten verbindbare Bolzen sein, die zusätzlich den Läufer 1 axial verspannen.

Ein dazu alternative und/oder ergänzende Befestigungsform besteht darin, die magnetischen und amagnetischen Bereiche des Läufers 1 durch Stoffschluss mit einander zu verbinden. Dabei sind Klebeverbindungen, Schweißverbindungen oder Lötverbindungen besonders geeignet.

Falls die amagnetischen Bereiche metallisch ausgeführt sind ist es besonders vorteilhaft magnetische und amagnetische Bereiche durch metallischen Stoffschluss wie Schweißen oder Löten miteinander zu verbinden.

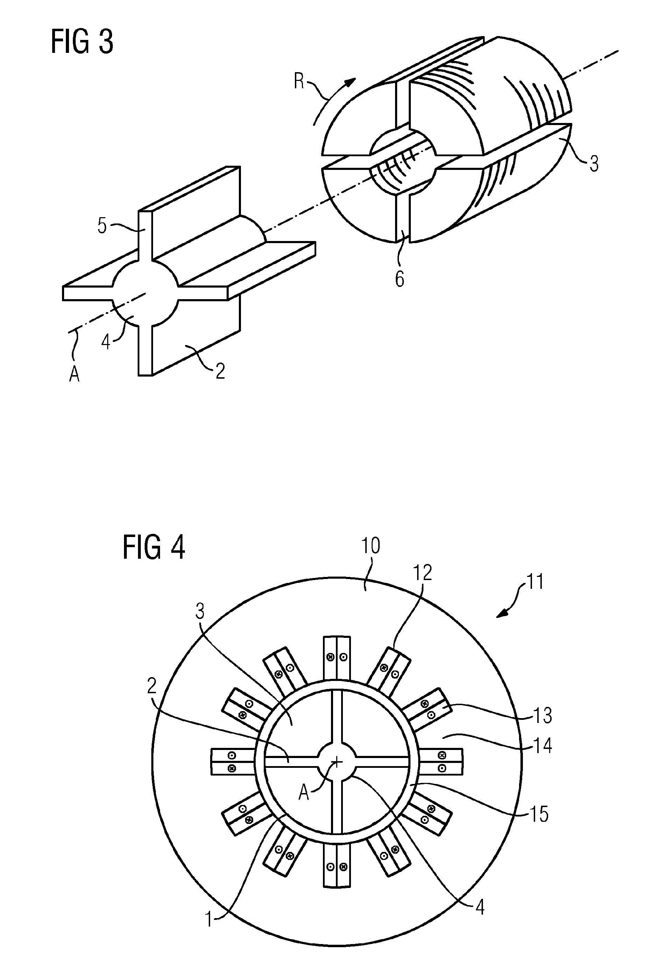

FIG 2 zeigt einen Läufer 1 in vierpoliger Ausführung, wobei die Welle 4 zentral angeordnet ist und sich radiale Stege 5 nach außen erstrecken. Es ergeben sich dabei nunmehr zwei d-Achsen, die senkrecht aufeinander stehen und mit den dazugehörigen q-Achsen 45° einschließen. Auch hier ist die Welle 4 amagnetisch ausgeführt und ist vorzugsweise mit den radial erstreckenden weiteren amagnetischen Bereichen 2 - also den Stegen 5 - einstückig ausgeführt, wie dies auch beispielsweise der FIG 3 zu entnehmen ist.

Die Welle 4 und die Stege 5 können ebenso aus Einzelteilen, also Welle 4 und eine von der Polzahl 2p vorgegebenen Anzahl Stege 5 zusammengesetzt und/oder gesteckt oder durch stoffschlüssige Verbindungen zusammen gesetzt werden.

In einer weiteren Ausführungsform können grundsätzlich natürlich die amagnetischen Bereiche 2 auch mit Luft, Aluminium oder amagnetischem Stahl gefüllt sein. Letztendlich entscheidend ist dabei aber, dass die Welle 4, neben ihrer amagnetischen Ausführung, also aus Stahl oder Aluminiumverbindungen, die an sie gestellten mechanischen Herausforderungen wie Aufnahme von Torsionsmomente, Drehmomentübertragung etc. gerecht wird.

Als weitere Herausforderung ist unabhängig von der Ausführungsform der rotatorischen dynamoelektrischen Reluktanzmaschine zu gewährleisten, dass insbesondere bei hohen Drehzahlen von 5000 U/min und mehr die Fliehkräfte des Läufers 1 durch geeignete Maßnahmen aufgenommen werden. Dies wird wie oben beschrieben u.a. durch mechanische Mittel oder stoffschlüssige Verbindungen gewährleistet.

Unabhängig von der Ausführung des Läufers 1 ist erfindungsgemäß die Breite B einer Pollücke vorteilhafterweise zwischen 1% und 50% einer Polteilung P. Dabei sind die Breite B und die Polteilung P als Länge des jeweiligen Kreisbogens des Läufers 1 zu sehen. Die radiale Tiefe T des magnetischen Materials ist zumindest in einem Abschnitt eines magnetischen Bereichs > 10% der Polteilung P. Die radiale Tiefe T nimmt vorzugsweise dabei in Richtung der amagnetischen Bereiche 2 stetig ab. In diesem Bereich verläuft vorzugsweise der magnetische Fluss 20.

Allgemein und unabhängig von der Ausführungsform sind die magnetischen Bereiche 3 in ihren Abmessungen neben der radialen Tiefe T an die vorgegebenen geometrischen Ausgestaltungen der amagnetischen Bereiche 2, der Welle 4 und/oder der Polzahl 2p und/oder dem magnetischen Flussverlauf angepasst.

Um einen Läufer 1 in vierpoliger Ausführung gemäß FIG 2 zu erhalten, ist beispielsweise ein Aufbau, wie in FIG 3 dargestellt, möglich. Dabei bildet ein amagnetischer Stern, der aus einer Welle 4 und seinen radial erstreckenden Stegen 5 gebildet ist, die Grundstruktur des Läufers 1. Die magnetischen Bereiche 3 werden entweder segmentweise oder durch eine nicht näher dargestellte Scheibe, die die Segmente einzeln miteinander verbindet auf den amagnetischen Stern geschoben. In die Schlitze 6 zwischen den amagnetischen Segmenten 6 werden nunmehr die Stege 5 eingesetzt. Die magnetischen Bereiche 3, also die Segmente sind vorzugsweise aus weichmagnetischem Material, das einstückig oder in axialer Richtung betrachtet, geschichtet aufgebaut ist.

FIG 4 zeigt einen rotatorischen Reluktanzmotor 11, der einen Ständer 10 aufweist in dessen Nuten 12 ein Wicklungssystem angeordnet ist, das insbesondere aus Zahnspulen 13 aufgebaut ist. Die Nuten 12 sind dabei offen ausgeführt, d.h. die Nutbreite am Luftspalt 15 entspricht im Wesentlichen der Nutbreite am Nutgrund. Dies vereinfacht die Positionierung der Zahnspulen 13 in den Nuten 12. In dieser Ausführung sind pro Nut 12 Hin- und Rückleitung unterschiedlicher Zahnspulen 13 angeordnet. Der vierpolige Läufer 1 wechselwirkt nun elektromagnetisch mit dem Ständer 10 und dessen bestromten Wicklungssystem. Damit stellt sich ein Drehmoment der rotatorischen dynamoelektrischen Reluktanzmaschine 11 ein.

Dieses Wicklungssystem 8 des rotatorischen Reluktanzmotors 11 kann aus Zahnspulen 13 bestehen, wie in prinzipiell dargestellt. Dieses Wicklungssystem 8 kann aber auch aus gesehnten Wicklungen aufgebaut sein.

Der Läufer 1 weist in Rotationsrichtung R wiederum unterschiedliche Bereiche auf. Es sind magnetische Bereiche 3 angeordnet, die sich in Rotationsrichtung R betrachtet mit amagnetischen Bereichen 2 abwechseln.

Die einzelnen Segmente bzw. Pole werden durch eine Bandage, an den Stirnseiten des Läufers 1 angebrachte Sicherungskappen oder durch Bolzen gesichert. Die Sicherungselemente hängen u.a. davon ab, ob die weichmagnetischen Bereiche 3 pro Pol geschichtet oder einteilig ausgeführt sind.

Durch stoffschlüssige Verbindungen der magnetischen und amagnetischen Bereich 2, 3 kann vorteilhafterweise auf die oben erwähnten Sicherungselemente verzichtet werden. Dabei sind nunmehr für den Läufer 1 keine Sicherungselemente vorzusehen, die die Fliehkräfte bei höheren Drehzahlen aufnehmen, und die Herstellung eines Läufers 1 unnötig aufwändig gestalten.

Ein weiterer Vorteil besteht darin, dass der Läufer 1 nunmehr einen geometrisch runden Umfang aufweist, obwohl er aufgrund seiner magnetischen Ausführung magnetisch unrund ist. Dieser geometrisch gleichmäßige Luftspalt 15 führt zu reduzierter Luftreibung, was wiederum die Effizienz des Reluktanzmotors 11 erhöht. Es tritt somit im Betrieb des Reluktanzmotors 11 kein Pumpeffekt im Luftspalt des Reluktanzmotors 11 auf, wie er beispielsweise bei gezahnten Oberflächenstrukturen von Läufern auftritt.

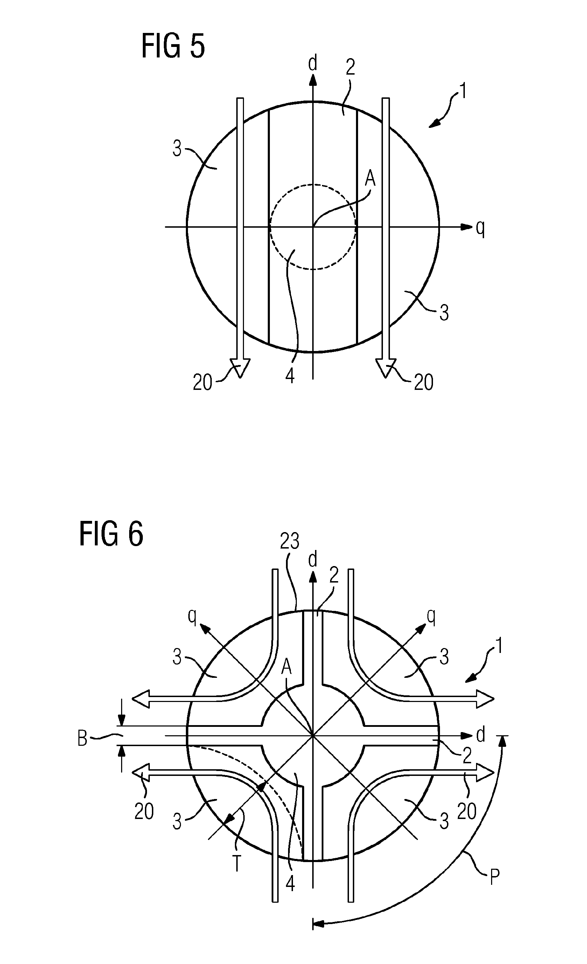

FIG 5 zeigt in Anlehnung an FIG 1 einen zweipoligen Läufer 1, mit einem Verlauf des Flusses 20 aufgrund des bestromten Wicklungssystems eines dementsprechenden - nicht näher dargestellten Ständers 10.

FIG 6 zeigt in Anlehnung an FIG 2 einen vierpoligen Läufer 1 mit einem Verlauf des Flusses 20 aufgrund des bestromten Wicklungssystems eines dementsprechenden - nicht näher dargestellten Ständers 10. Insbesondere an den Bereichen 23 - also den Übergängen von den amagnetischen Bereichen 2 zu den magnetischen Bereichen 3 an der Oberfläche des Läufers 1 ist die angestrebten höchste Flussdichte.

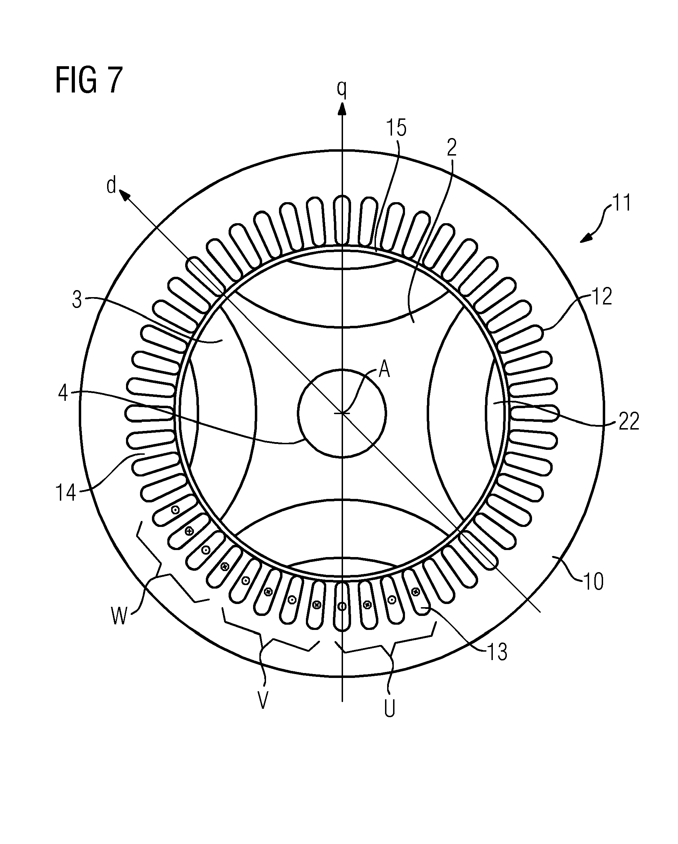

FIG 7 zeigt eine Reluktanzmaschine 11 mit bzgl. des Flussverlaufs optimierten magnetischen und amagnetischen Bereichen 2,3. Die Optimierung besteht nunmehr u.a. darin, lediglich die Abschnitte der magnetischen Flussführung mit magnetischen Materialien zu versehen.

Die magnetischen Bereiche 3 sind auch hier - in Rotationsrichtung R betrachtet - nur von amagnetischen Bereichen 2 umgeben, wie dem Luftspalt 15, den amagnetischen Bereichen 2, und einem amagnetischen Segmentabschnitt 22 umgeben. Diese Segmentabschnitte 22 sind in dieser Ausführung ebenfalls amagnetisch ausgeführt, da, wie u.a. FIG 6 zeigt, in diesen Bereichen nahezu kein Flussverlauf stattfindet.

Um dann den Pumpeffekt, der sich bei geometrisch unrunden Läufern 1 einstellt zu vermeiden, sind diese Abschnitte durch die Segmentabschnitte 22 "aufgefüllt". Diese sind ebenfalls oben ausgeführt durch geeignete Mittel wie Bandagen oder stoffschlüssige Verbindungen mit dem jeweiligen magnetischen Bereich 3 fixiert.

Die erfindungsgemäße Reluktanzmaschine mit den oben beschriebenen jeweiligen Ausführungsformen wird auch als inverse Reluktanzmaschine bezeichnet.

Der erfinderische Gedanke kann somit bei Läufern rotatorischer Reluktanzmaschinen 11 unabhängig von ihren geometrischen Abmessungen, Leistungsklassen und ihrem Einsatzzweck (motorisch oder generatorisch) umgesetzt werden. Reluktanzmaschinen 11 mit erfindungsgemäßen Läufern 1 eignen sich aufgrund ihres erfindungsgemäßen einfachen Aufbaus insbesondere für Antriebe von straßen- und schienengebundenen Fahrzeugen, wie Elektroautos, Straßenbahnen aber auch für Fahrzeuge des Luftverkehrs ebenso wie durch Elektromotoren angetriebene Flugzeuge und Helikopter.

## Patentansprüche

1. Läufer (1) einer rotatorischen dynamoelektrischen Reluktanzmaschine (11), mit einer Rotationsrichtung (R) um eine Rotationsachse (A), wobei der Läufer (1) in Rotationsrichtung (R) betrachtet Bereiche (2,3) unterschiedlicher magnetischer Widerstände aufweist, wobei Bereiche (3) mit Material von einer guten magnetischen Leitfähigkeit (µᵣ > 50) Pole mit der Polzahl 2p des Läufers ausbilden, wobei diese Bereiche von amagnetischem Stoff (µᵣ < 5) umgeben sind, wobei sich die Polteilung in Rotationsrichtung (R) betrachtet von der Mitte eines amagnetischen Bereichs (2) zur Mitte des nächsten amagnetischen Bereichs (2) erstreckt.

2. Läufer (1) nach Anspruch 1, **dadurch** ge - **kennzeichnet** , dass die Breite (B) der amagnetischen Bereiche (2) in Rotationsrichtung (R) betrachtet, in Abhängigkeit von der Anzahl der Pole 2p zumindest an der Oberfläche des Läufers (1) zwischen 1% und 50% der Polteilung (P) beträgt.

3. Läufer (1) nach Anspruch 1 oder 2, **dadurch ge** - **kennzeichnet,** dass die radiale Tiefe (T) eines Pols zumindest abschnittsweise > 10% der Länge des Kreisbogens der Polteilung (P) entspricht.

4. Läufer (1) nach einem der Ansprüche 1 bis 3, da - **durch gekennzeichnet**, dass die Welle (4) amagnetisch ausgeführt ist.

5. Läufer (1) nach einem der Ansprüche 1 bis 4, d a - **durch gekennzeichnet**, dass bei einer zweipoligen Ausführung des Läufers (1) der Durchmesser der Welle (4) der Breite (B) des amagnetischen Bereichs (2) entspricht.

6. Läufer (1) nach einem der Ansprüche 1 bis 4, **da** - **durch gekennzeichnet**, dass bei einer vier- oder mehrpoligen Ausführung des Läufers (1) die amagnetischen Bereiche (2) durch sich von der amagnetischen Welle (4) aus radial ersteckende amagnetische Stege (5) gebildet werden, wobei die Anzahl der Stege (5) der Anzahl der Anzahl der Pole 2p des Läufers (1) entspricht.

7. Läufer (1) nach einem der vorhergehenden Ansprüche, **dadurch gekennzeichnet , dass** die magnetischen Bereiche (3) an den amagnetischen Bereichen (2) durch eine Bandage und/oder Stoffschluss und/oder Verbindungselemente an den Stirnseiten des Läufers (1) gehalten sind.

8. Rotatorische dynamoelektrische Reluktanzmaschine (11) mit einem Läufer (1) nach einem der Ansprüche 1 bis 7, wobei ein Ständer (10) und der dazugehörige Läufer (1) der Reluktanzmaschine (11) die gleiche Polzahl 2p aufweisen.

9. Straßen- und schienengebundenes Fahrzeug mit einem oder mehreren rotatorischen dynamoelektrischen Reluktanzmaschinen (11) nach Anspruch 8.
